(19) **Europäisches Patentamt / European Patent Office / Office européen des brevets**

(11) **EP 4 787 647 A1**

(12) **EUROPEAN PATENT APPLICATION**

(43) Date of publication:
05.08.2026 Bulletin 2026/32

(21) Application number: 25155310.3

(22) Date of filing: 31.01.2025

(51) International Patent Classification (IPC):
*H02H 9/04* (2006.01)

(52) Cooperative Patent Classification (CPC):
**H02H 9/041; H02H 9/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: ABB SCHWEIZ AG
5400 Baden (CH)

(72) Inventors:
- **Maislinger, Franz**
  **5230 Mattighofen (AT)**
- **Mayrhofer-Huber, Gerhard**
  **4880 St. Georgen im Attergau (AT)**
- **Wyss, Jonas**
  **8406 Winterthur (CH)**

(74) Representative: **Weiss Patentanwalts GmbH**
**Prinz-Eugen-Straße 70**
**1040 Wien (AT)**

(54) **METHOD, DEVICE AND ARRANGEMENT FOR SURGE PROTECTION**

(57) An improved surge protection device (1) is provided, the surge protection device (1) having a detection unit (2) for generating a detection signal (d) indicative of the occurrence of an energy rich pulse caused by an electrical surge in an electrical power system (10), a bypass unit (3) with a bypass path (34) to, depending on the detection signal (d), bypass the pulse, and an absorption unit (4) to arrest the pulse after the pulse has been bypassed through the bypass unit (3).

Fig. 1

**Description**

Field of the invention

The present invention relates to a surge protection device as well as to a surge protection method for arresting an electrical surge occurring in an electrical power system with at least a first and a second power line to supply electric power.

Moreover, the invention relates to an arrangement comprising a surge protection device and an electrical device, the electrical device being designed to be electrically supplied via the first and the second power line of the electrical power system.

Background

In the power lines of electrical power systems, excessive and abrupt increases of electrical quantities constitute a frequent and critical phenomenon, most importantly excessive and abrupt increases of electric voltages and electric currents. Commonly and hereafter, said abrupt increases of electrical quantities are referred to as "surges". Surges may arise from sudden incidents, particularly lightning strikes, short circuits between power lines, or the abrupt activation of additional loads etc. To safeguard electronic devices from surges, surge protective devices (SPDs) are widely employed. SPDs are designed to protect loads from voltage surges and/or current surges. In most cases, one of the two strategies is implemented for surge protection: series protection or parallel protection. Series protection typically utilizes a high impedance in line with a load to be protected, in order to obstruct or limit a surge current, while parallel protection aims at channeling dangerous surge currents through an impedance parallel to a load to be protected, preferably into an absorption element.

In the technical field of power rectifiers, it is state of the art to use mains filters including boost chokes with large volume and impedance (referred to below as "mains filters" or "large mains filters"), in order to suppress PWM-induced disturbances (PWM ripples) produced by the rectifier from entering the power, i.e. transmission, lines of the power system, particularly in the case of AC-DC converters for rectifying an AC mains voltage into a DC voltage. The desired main effect of a large mains filter is that PWM-induced disturbances are kept from entering the power lines ("filter function"). However, a significant side effect of a large mains filter is that the filter also limits surge voltages and/or surge currents from acting on and affecting the rectifier in case of a surge event taking place in the power lines, thus protecting the rectifier from overcurrent and overvoltage ("protection function"). Surge pulses are suppressed or absorbed in the mains filter on the AC side of the rectifier.

An important trend affecting the protection function of said AC side mains filters is the increasing use of multilevel topologies (i.e., rectifiers with three levels and more, "multi-level active rectifiers"), which leads to reduced PWM-induced disturbances, which allows for reductions in volume and impedance of mains filters as well as of boost chokes. While these reductions save cost and components and are thus highly desired, reduced chokes, on the downside, mean that in the case of a mains surge event, the voltages and currents acting on a rectifier can reach higher values faster. It happens that surges are no longer absorbed sufficiently in a mains filter. Consequently, protection through a mains filter is diminished, which is problematic in many practical cases, as multi-level active rectifiers are particularly sensitive to overvoltage. Hence, appropriate surge protection is needed in modern systems comprising multi-level active rectifiers, frequently even in addition to potentially already present mains filters.

Surge protection for multi-level active rectifiers, but also for a wide variety of other electrical components requiring surge protection, on the one hand, needs to react quickly to overvoltage and overcurrent. On the other hand, a surge protection device should not be overly sensitive. In practice, scenarios exist where timely only short ($<1\mu s$) overvoltage bursts appear, e.g. in a mains power line. Such bursts are so short that no significant voltage increase can be seen on the rectifier side of a mains filter, even if only a small mains filter is used. Thus, no protection measures or deactivations of a rectifier are desired in such cases. The requirement to explicitly tolerate short bursts with small energy is even expressed in the IEC 61800-3 and IEC/EN 61000-6-2 norms of standard. Consequently, SPDs are required to accomplish a delicate balancing act between sensitivity, speed and robustness. Unfortunately, SPDs known from the prior art either are slow and insensitive, or fast and overly sensitive, leading to unsatisfactory protection behavior.

Thus, there is a need for improved surge suppression, in particular for surge a suppression that balances the need for high sensitivity and robustness at the same time.

Summary

This object, for the surge protection device mentioned at the outset, is achieved in that a detection unit connectable to the first and/or second power line is provided to generate a detection signal indicative of an occurrence of an energy rich pulse in the power system caused by the electrical surge, in that a bypass unit is further provided, the bypass unit having a first bypass terminal connectable to the first or the second power line, a second bypass terminal connected to the first bypass terminal via an electrical bypass path, and a trigger terminal being designed to receive the detection signal generated by the surge detection unit, the electrical bypass path switchable from an electrically blocking state to an electrically conducting state in response to the detection signal, and in that an absorption unit having a first absorption terminal connectable to the second bypass terminal of the bypass unit is provided, the absorption unit being designed to arrest the electrical surge and hence allow for protection from the electrical surge in case the bypass path is in conducting state.

The surge protection scheme according to the invention offers several advantages. By monitoring the amount of energy transported by a pulse, the invention achieves a coordinated and targeted protection scheme, and a new perspective on systems where surge protection is required. Preferably, by defining a minimum energy threshold that has to be surpassed by a pulse in order to qualify as an energy rich pulse, insignificant fluctuations are ignored automatically, while no sensitivity or reaction speed is lost.

Advantageous embodiments of the surge protection device according to the invention are provided in dependent claims 2 to 7.

As mentioned at the outset, the invention further relates to an arrangement comprising said surge protection device and an electrical device, the electrical device being designed to be electrically supplied via the first and second power line of the electrical power system, as well as to a method for surge protection. Said method, corresponding to the device outlined above, comprises the steps of, by means of a detection unit, generating a detection signal indicative of an occurrence of an energy rich pulse in the power system caused by the electrical surge, providing a bypass unit with a first bypass terminal connected to the first or the second power line, a second bypass terminal connected to the first bypass terminal via an electrical bypass path, and a trigger terminal designed to receive the detection signal generated by the surge detection unit, in response to the detection signal, switching the electrical bypass path from an electrically blocking state to an electrically conducting state; by means of an absorption unit connected to the second bypass terminal of the bypass unit, arresting and hence allowing for protection from the electrical surge in case the bypass unit is in conducting state.

Advantageous embodiments of the surge protection method according to the invention are provided in dependent claims 14 and 15.

Detailed description

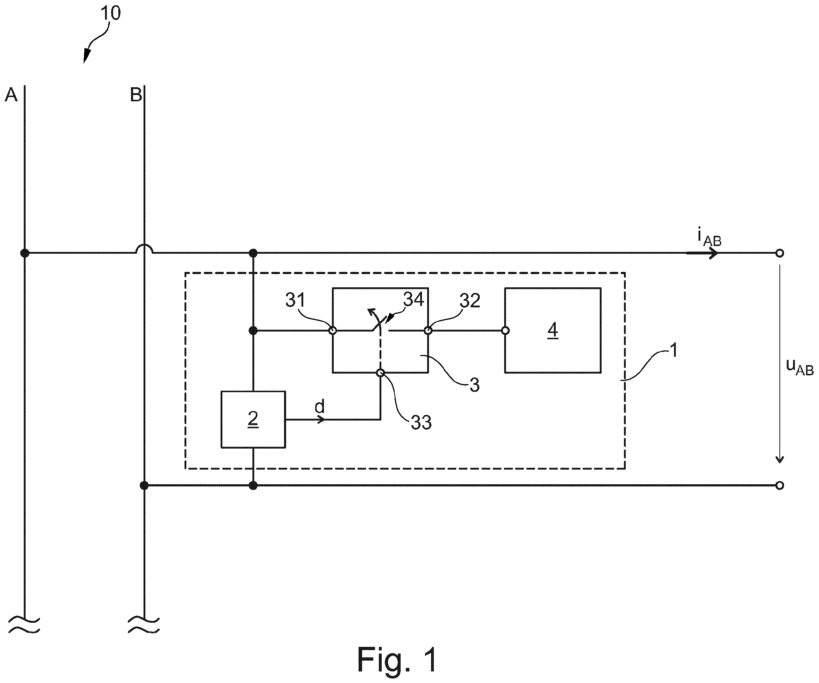

The present invention is described in greater detail below with reference to Figs.1 to 7, which show schematic and non-limiting advantageous embodiments of the invention by way of example. The specific examples described herein are only used to explain the content of the present invention and are not intended to limit the present embodiment. The following are shown:

Fig.1 is a first, stripped-down working example of the invention,

Fig.2 is a circuit diagram to implement the sub-components of the invention,

Figs.3a and 3b are two particularly advantageous embodiments of the invention,

Fig.4 is a first arrangement of a surge protection device (SPD) according to the invention and a rectifier,

Fig.5 is a second arrangement of a surge protection device (SPD) according to the invention and a rectifier,

Fig.6 a third arrangement of a surge protection device (SPD) according to the invention and a three-level rectifier,

Fig.7 is a flow chart depicting a sequence of steps to carry out the invention.

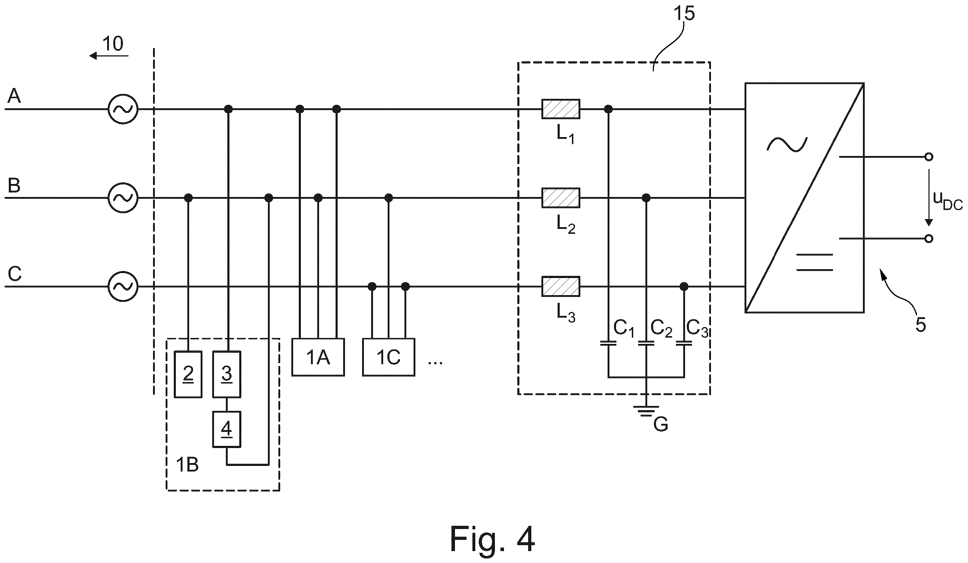

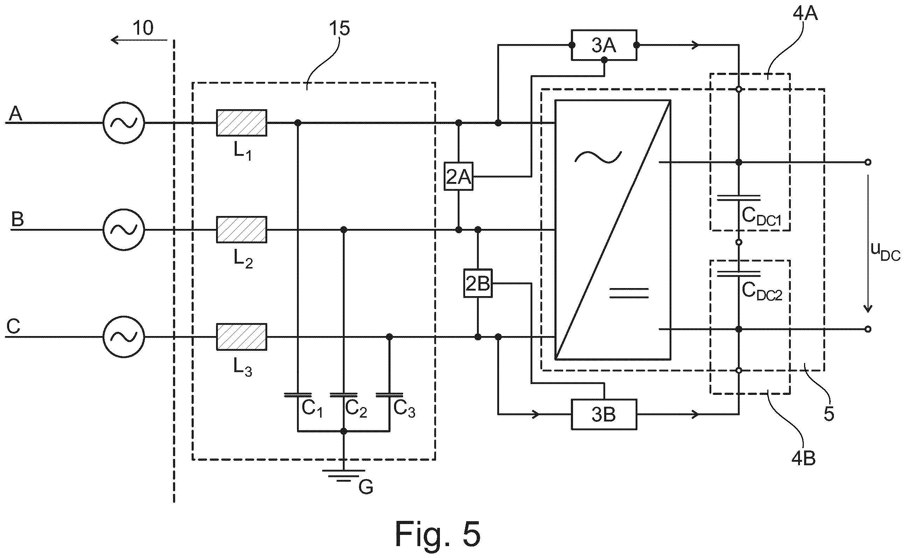

Fig.1, in a stripped-down version, illustrates an application of the invention to an electrical power system 10. The likewise stripped-down electrical power system 10 has a first power line A and a second power line B to supply electric power, preferably to an electrical load 5 (not shown in Fig.1, hereafter also short "load"). An (electrical) load supplied by said power lines A, B may be a single load or a combination of a plurality of loads 5, e.g., a single or a plurality of electric machines or devices or computing units or rectifiers etc. An electrical power system 10, to which the invention may be applied to, can be an electrical grid for power distribution, and, besides the lines shown in Fig.1, may further comprise one or many electrical sources of different kind, or electrical storages or a combination of storages and/or loads and/or further power systems that feed into the power system 10 shown. Said power lines A, B may supply an AC voltage, but also DC voltages. Moreover, as will be explained in detail later (esp. Figs.4 and 5), also three or more power lines A, B, C may be provided, as it is typically the case in AC systems. All of these scenarios represent potential use cases where electrical surges can occur, and where appropriate surge protection is required. For that purpose, a surge protection device (SPD) 1 according to the invention may be arranged between said power lines A, B. The SPD 1 according to the invention may in particular be provided as a retro fit object, thus being independent of a power system 10 or a load 5 it is later on applied to.

As discussed previously, electrical surges occur when there's a sudden increase in voltage within an electrical system, such as within the electrical power system 10. Such increases can happen due to various factors, including lightning strikes, power grid switching operations, or faults in electrical equipment arranged in electrical power systems 10 like the one shown. Surges can pose significant dangers, and potentially even damage loads 5 that are supplied through the power system 10. In severe cases, surges can cause fires, electrical shocks, or disrupt the operation of critical electronic components. In the electrical power system 10 depicted in Fig.1, surges can take on different forms, such as bi-directional oscillations between the power lines A, B, or unidirectional electrical pulses, voltage or current pulses in line A and/or B, etc.

To counteract these scenarios, an SPD should accomplish a delicate balancing act. On the one hand, the SPD are required to react swiftly to overvoltages and overcurrents to effectively shield sensitive equipment. This requires a high degree of sensitivity to quickly detect and respond to transient events. However, excessive sensitivity can lead to unwanted tripping. Minor voltage fluctuations, such as those caused by switching operations in a power grid, can trigger an overly sensitive SPD, hence unnecessarily interrupting power supply and potentially disrupting operation. Such false tripping can be highly disruptive, especially in safety critical systems. This inherent contradiction represents a significant challenge in the design of SPDs.

To solve these problems and to improve surge protection concepts known from the prior art, i.e., to allow for surge protection that provides the right amount of sensitivity and robustness at the same time, the invention suggests a surge protection device 1 equipped with a detection unit 2 to detect a surge event, a bypass unit 3 to be switched depending on the result of the detection unit 2, and an absorption unit 4 to arrest a surge when the bypass unit, depending on the result of the detection unit 2, is switched to a conducting state.

In the embodiment of Fig.1, the detection unit 2 of the SPD 1 is detachably connected to the first power line A as well as to the second power line B. The detection unit 2 is capable of generating a detection signal d indicative of the occurrence of an energy rich pulse in the power system 10. In a power system 10 like the one shown, it was found that the by far most prominent cause for energy rich pulses are electrical surges. Hence, if energy rich pulses are detected, electrical surges are detected automatically, too. In contrast to the prior art, however, building the surveillance of a power system to be protected from surges on the monitoring of electrical energy transported by pulses in the power system shows to achieve significantly improved results when it comes to balancing sensitivity, reaction speed and robustness.

There is a series of approaches to implementing the detection unit 2. The crucial point, as mentioned above, is that the detection unit 2 is capable of detecting that a pulse is present in said power lines A, B, as well as of monitoring the energy that is transported by the pulse.

To sense and detect that a pulse is present, a rate of change threshold may be defined, e.g., of the voltage between line A and line B, or of a current flowing through lines A and/or B, above which the presence of a pulse can be assumed. For instance, in case of a sinusoidal voltage, it is well known that the steepest slope, i.e. the highest rate of change of the voltage occurs when the sinusoid assumes its arithmetic mean value. The slope at this point can typically be calculated in advance, such that rates of change significantly exceeding this maximum rate of change are an indicator of the presence of pulse. For example, for a 230V RMS, 50Hz voltage transported by lines A, B, the peak voltage is approximately 325V. By differentiating this sinusoidal voltage and considering the peak value of the cosine function, the maximum rate of change is calculated to be approximately 100,000 Volts per second. This value represents the fastest possible change in voltage within the grid under the ideal conditions assumed above. Hence a rate of change threshold indicating a pulse could be selected as 150,000 Volts per second, or as 200,000 Volts per second. Generally, pulse detection in electrical systems can be achieved through various methods, including threshold detection, edge detection, pulse width discrimination, pulse shape analysis, frequency domain analysis, and the use of specialized integrated circuits. The optimal method depends on the specific characteristics of the pulse and the system requirements, such as the desired speed, accuracy, and noise immunity. Numerous documents have been published on this topic, e.g., US 2023/0108660 A1. Thus, the presence of a pulse can, for example, be detected in case a rate of change threshold is exceeded for a first time (the pulse rising), and the pulse can be assumed to last until the rate of change threshold is exceeded a second time (preferably the pulse falling).

From a theoretical standpoint, monitoring the energy transported by an electric pulse in a power system 10 like the one shown comes down to capturing, directly or indirectly, a voltage waveform of a voltage dropping between power lines A, B and on capturing, directly or indirectly, a current waveform of a current flowing through one of the power lines A, B. By multiplying the instantaneous voltage and current values at each point in time, an instantaneous power waveform can be calculated, as is well-known from basic electrical engineering. Integrating said instantaneous power over the duration of the pulse yields the energy transported by the pulse, typically expressed in Joules. Mathematically, this is represented as $E = f(V(t) * I(t)) \, dt$, where E is energy, V(t) is voltage between lines A, B as a function of time, and I(t) is current as a function of time. Typical energy thresholds, above which a pulse can be considered energy rich, are, for example, 10 Joules or 20 Joules or 50 Joules or 100 Joules. If the energy of a pulse exceeds such a threshold, the detection signal d of the invention may assume a first state indicating the presence of an energy rich pulse, the first state allowing to switch the bypass unit 3 (i.e., the electrical bypass path 34 as will be explained later) into conducting state. In case the energy threshold is not exceeded, a second state that does not allow to switch the bypass unit 3 may be assumed.

Hence, monitoring whether an energy rich pulse is present and generating a detection signal d based thereon can be understood to correspond to detecting whether a pulse is present, e.g., an electrical or magnetic or electromagnetic pulse in one of the power lines and/or between the power lines, which can be carried out by an appropriate method for pulse detection, as well as to monitoring the energy transported by the pulse, i.e., during the occurrence of the pulse, for which an appropriate method may be selected as well, as described above.

To implement pulse detection and energy monitoring in practice, the detection unit 2 may either be implemented in digital or in analog fashion. In case of an analog implementation, a capacitive element, e.g. a capacitor, may be provided, which, in a particularly beneficial and efficient fashion, can combine both aspects of pulse detection and energy monitoring. A capacitor is designed to integrate the rate of change of the voltage and transform it into an electric current, which may be used as a detection signal d that can represent the presence of a pulse as well as the presence of sufficient energy. The bypass unit 3 is designed such that it can only be switched when enough current has flown through such a capacitor (as will be explained later, typically, a gate capacitance of a switch needs to be charged), such that the amount of current needed and thus the level of the detection signal d, combined with its temporal duration, represents an energy transported by the pulse. The current required to switch the bypass unit 3 may be selected such that it corresponds to a specific energy threshold. Possible current threshold when using a capacitor could be 0,001A or 0,005A or 0,01A or 0,05A or 0,1A or 0,5A or 1A or 10A or another suitable current threshold, and in a preferred fashion, it may be required that such a current has to be present for a prescribed time, e.g. 1µs or 5µs or 10µs or 100µs or 0,5ms or 1ms or 10ms or 100ms or 0,5seconds or 1 second etc. Another possibility for an analog implementation would be to use an inductive element, like an inductor, and transfer a current through either line A or B into a volage as a detection signal d, using the same principle in a different fashion. Said integral of a rate of change may preferably be scaled to arrive at the detection signal d indicative of the presence of a pulse and of the energy transported by the pulse. In case of a capacitor, the integral may be automatically scaled by the capacitance of the capacitor, in case of an inductor such a scaling may be based on its inductance value. However, in case a rate of change of a voltage is integrated, the integral may as well be scaled by the voltage, or in case in case a rate of change of a current is integrated, the integral may as well be scaled by the current to generate a meaningful signal.

In case of a digital implementation, analog measurement signals of a voltage and a current could be fed into an analog-to-digital converter (ADC). Measurements of currents and voltages can be carried out by means of an appropriate voltage measuring device and an appropriate current measuring device, such as a voltage probe and a current probe, or a voltage divider switched in series with an operational amplifier circuit to provide a signal proportional to the voltage, and/or a current transformer could be used to measure the surge current, with the output of the transformer rectified and smoothed to provide a DC voltage proportional to the surge current. Also specialized energy measurement devices may be employed. The ADC would sample such signals, convert them into digital values that can be processed by a microcontroller or digital signal processor (DSP). For also detecting voltage changes, i.e. dv/dt changes, with sufficient accuracy and sufficient speed, a fast voltage measurement with a bandwidth in the range of 1 MHz as well as with an effective resolution of 8 bit has turned to produce convincing results that ensure a robust surge / fault detection for the whole grid input range. The microcontroller or DSP could then be programmed to detect pulses due to surges based on the amplitude, duration, or frequency content of the signals, multiply them and integrate them in order to arrive at an energy transported by the pulse, and generate a detection signal d therefrom.

Further, the bypass unit 3 of the surge protection device 1 according to the invention has a first bypass terminal 31 detachably connected to the first or the second power line A, B, a second bypass terminal 32 connected to the first bypass terminal 31 via an electrical bypass path 34, and a trigger terminal 33 designed to receive the detection signal generated by the surge detection unit 2. The electrical bypass path 34 is switchable from an electrically blocking state to an electrically conducting state in response to the detection signal d, which is generated by the detection unit 2.

Lastly, the absorption unit 4 according to the invention has a first absorption terminal 41 connectable to the second bypass terminal 32 of the bypass unit 3, such that it can arrest an electrical surge in case the bypass path 34 is in conducting state, i.e. redirect a current caused by the surge such that it can do no harm to a load 5, and further store the energy transported by such a current or transform it to heat in a resistor. Arresting an electrical surge hence can be understood as protecting, e.g. a load 5, from a surge, or as bypassing an electrical surge from a load 5 or from parts of a load 5 that require protection. The absorption unit 4 comprises an absorption element, which may take the form of an electrical impedance, a varistor, a capacitor, a resistor, or any combination thereof. A person skilled in the area of power electronics is aware of possible options to arrest potentially dangerous currents or voltages. In a preferred embodiment, as also shown in Fig.1, the absorption unit 4 is only connected to the bypass unit 3, and thus has no further connection to the power lines A, B. In this fashion, it becomes possible to decouple the absorption unit 4 from the power system 10.

The surge protection scheme according to the invention offers several advantages, especially in relation to improving reliability and protection against surges of various types. By utilizing the amount of energy transported by a pulse, the invention achieves a coordinated protection scheme, that allows to be fine-tuned to the specifics of any given use case, leading to an optimized balance between sensitivity and robustness. Especially by defining a minimum energy threshold that has to be surpassed by a pulse in order to qualify as an energy rich pulse, insignificant fluctuations can no longer trigger the surge detection, while fast and accurate detection and reaction of surge pulses is still possible.

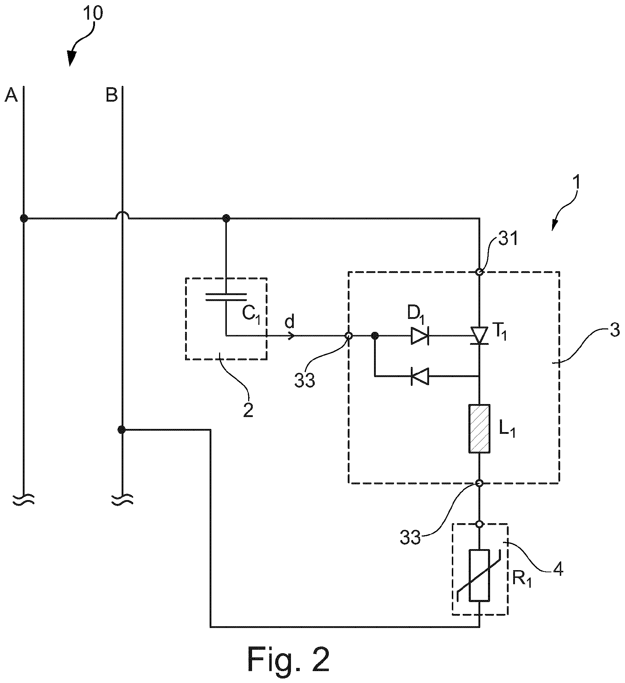

Fig.2 presents a detailed electronic schematic of a possible implementation of the components of an SPD according to the invention. The detection unit 2 comprises a capacitive element to integrate said rate of change and transform it into an electric current as the detection signal d. It often turns out to be beneficial if the capacitive element, i.e., the capacitor, is connected directly to the bypass unit 3 and hence the bypass path, i.e. without any further electrical components between the capacitor and the bypass unit 3, making sure that there is no further resistance and/or impedance and/or capacitance and/or inductance disturbing or delaying a reaction to a surge event detected by the capacitive element (capacitor) in the detection unit 2. The electrical bypass path 34 of the bypass unit 3 includes switching means in the form of two diodes D1, D2 and a thyristor T1, which electrically connect the first and second bypass terminals 31 and 32. Further, in the bypass unit 3 of Fig.2, an inductor L1 is arranged between the first and second bypass terminals 31 and 32, positioned in series with the switching means. The inductor L1 only serves to protect the switching means from electrical overcurrent and hence is not a necessary component of the implementation according to Fig.2. The absorption unit 4 is made of a varistor R1, but may also be implemented differently, as explained above.

Generally speaking, the electrical bypass path 34 of the bypass unit 3 includes switching means to electrically connect the first and second bypass terminals 31 and 32. These switching means may be selected from a group comprising a TRIAC (Triode for Alternating Current), an SCR (Silicon-Controlled Rectifiers), a thyristor etc., which are all well known in power electronics. In particular thyristors offer efficient power control, are cost-effective, and have long lifespans. Each element in this group possesses a gate electrode connected to the trigger terminal 33 of the bypass unit 3. This configuration allows the gate electrode to receive and respond to the detection signal d. As a gate capacitance of the switching means has to be charged in the course of a switching process, a conductive current as a detection signal d produced by the detection unit 2 also is an indicator of the energy transported by a pulse caused by a surge event.

In the schematic shown in Fig.2, the gate of the thyristor is connected via a capacitor and a diode combination to one of the phases. Hence no additional ignition transformer or controlling coming from the signal side is required. In case of a surge event between two phases, the capacitor sees a high dv/dt which leads to a current into the gate of the thyristor to charge it. When the thyristor gate voltage is high enough, which takes 5 to 8$\mu$s depending on the surge level, the thyristor starts to conduct and the varistor then limits the phase-to-phase voltage and hence protects the multilevel structure. As soon as the current through the thyristor T1 becomes negative (after < 30$\mu$s), the thyristor T1 starts to switch off automatically and thus interrupts the connection to the limiting varistor again. The undesired current due to a surge has then been discharged and normal operation can resume. To handle surge events of different polarity, the circuit of Fig.2 is preferably provided a second time in opposite direction, i.e., vice versa between phase B and phase A. In total, e.g., to protect three phases of a three-phase power system 10, six thyristor-Varistor-inductor combinations are then required. The voltage rating of the charging capacitor preferably is at least 500V to fulfill the requirements regarding grid voltages. To implement the circuit according to Fig.2, a 1000 V type X7R capacitor may be chosen. Preferably, the thyristor has an appropriate voltage rating as well and is thus capable to handle current pulses up to 1000 A. As explained above, the current rise time of such thyristors is limited, hence the additional inductor L1, e.g. a 1$\mu$H inductor or an inductor with an even higher inductance, limits the occurring di/dt in the current path to protect the thyristor T1.

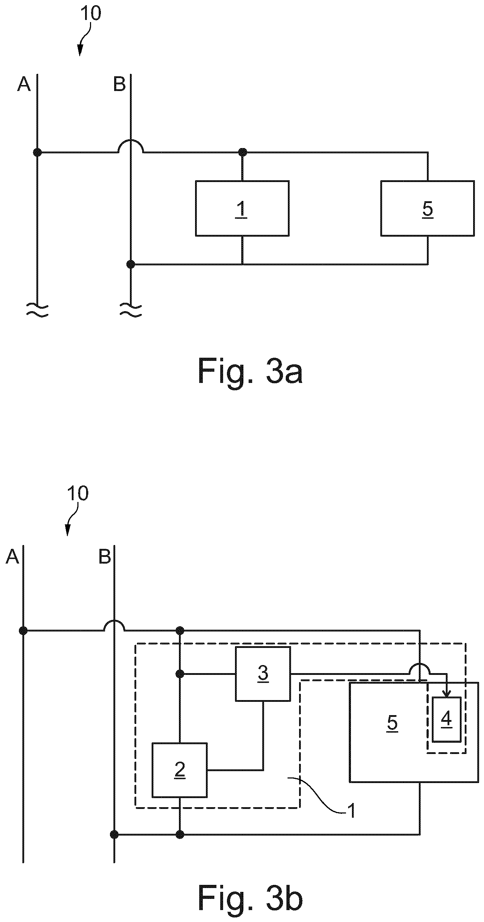

To further explain the concept of the invention, Figs.3a and 3b show embodiments where a load 5 to be protected is shown expressly. In the configuration according to Fig.3a, the SPD 1 and the load 5 are strictly separate, with all the components of the SPD 1 (detection unit 2, bypass unit 3, absorption unit 4) contained in the SPD 1 only, thus without intersections with the load 5. Contrary to that, Fig.3b presents a particularly advantageous embodiment of the invention, where an element or potentially also a series of elements of the load is used to arrest a surge. It was found that in many practically relevant use cases, a load 5 comprises elements that need to be protected from surges, but also elements that can be used to arrest a surge. Using elements that are present in a load 5 anyway reduces the component count and outlay. An important example of the embodiment according to Fig.3b, that will be explained at length in the following, is the usage of output capacitors of rectifiers, e.g. the usage of a DC link capacitor arranged on an output side of AC/DC converter. Other examples include the usage of a ground resistance of an electric machine etc. In the embodiment according to Fig.3b, said bypass path 34 of the bypass unit 3 thus partly runs parallel to the load, i.e. parallel to those elements in the load 5 that require protection, like sensitive switches etc. The bypass path 34 hence extends from a first bypass terminal 31 to an absorption element in the load 5. In such a scenario, it is also conceivable that the surge protection device 1 is provided as an integral component of the electrical load 5, thus already being included in the load 5 in the production of the load 5 and preferably being irremovable from the electrical load 5. Hence, in this preferred embodiment, the load 5 comprises an internal element capable of acting as an absorption element, which can be a DC-bus capacitor on an output side of the load 5 or a resistor in the load 5 or a capacitor inside the load 5 which, preferably, is robust against surges and thus does not require protection, and said internal element is used as an absorption element in the absorption unit to accept the electrical surge and protect the rest of the load, hence to arrest the surge.

Fig.4 shows a further, particularly beneficial embodiment of the invention, where a first arrangement of a surge protection device 1 according to the invention and a 3-phase-rectifier combined.

In technical applications involving 3-phase-rectifiers, in particular bidirectional AC-DC converter with two level topologies, it is state of the art to arrange mains filters including boost chokes with large volume and impedance (also referred to as "large mains filters") between power lines of the mains and the rectifier. In such a scenario, the main function of a mains filter is to suppress PWM-induced mains interferences from the rectifier to the mains ("filter function"). Additionally, a positive side effect of a mains filter is that it also limits the current increase as well as the phase-to-phase voltages acting on semiconductor switches of the rectifier, and thus protects the semiconductor switches from overcurrents and overvoltages in case of a voltage surge in the mains power lines ("protection function"). Surge pulses are thus absorbed in the "large mains filter" on the AC side.

As discussed earlier, the use of multilevel topologies (3L and more) in bidirectional AC-DC converters (referred to below as "multi-level active rectifier") is gaining increased popularity, allowing for a significant reduction in the volume and impedance of mains filters and boost chokes to fulfil the "filter function". This lowers costs, improves form factors and increases the overall efficiency of an arrangement to convert AC to DC voltages and vice versa. However, this reduction in filter components means that the protection function deteriorates, such that in a surge event, the currents in the semiconductors reach critically high values, which can destroy the semiconductors. If surges are not sufficiently absorbed in a mains filter anymore, dedicated surge protection is mandatory. However, also in cases of two-level converters additional surge protection can be reasonable, especially if it is desired to reduce the size of filter components such as boost chokes.

How a surge protection device 1 according to the invention can be used to protect a rectifier in a scenario like the one outlined above, is shown in Fig.4. In the scenario laid out in Fig.4, an active bidirectional AC-DC converter, preferably a multi-level converter, acts as load 5 that is supplied with AC voltages from a three-phase power system 10 comprising lines A, B, C. The load 5 is designed to convert said AC mains voltage, provided by the first, second and third power lines A, B and C into a rectified DC voltage $U_{DC}$. In front of the load 5, a mains filter 15 as provided, having chokes L1, L2, L3 and capacitors C1, C2, C3. In order to protect the load 5 from surges even in case only small boost chokes L1, L2, L3 are used, a series of SPDs 1A, 1B, 1C may be arranged between the mains filter 15 and the lines A, B, C. As can be seen in Fig.4, an SPD may be provided for every pair of lines (A,B), (A,C), (B,C), .... Due to the position of the SPD between the mains filter 15 and the lines A, B, C, the dead time until the SPD gets active, in case of an implementation according to Fig.2 e.g. until a varistor gets active, can be reduced significantly in comparison to situations where the SPD is arranged between the mains filter 15 and the load 5, which is of course also conceivable.

However, in case the SPDs according to the invention are arranged between the mains filter 15 and the power lines A, B, C, a further, particularly advantageous embodiments of the invention can be achieved, which is shown in Fig.5. The AC-DC converter 5 of Fig.5, preferably again a bidirectional multi-level converter, includes at least one, in the case shown two DC-bus capacitors $C_{DC1}$, $C_{DC2}$ on its output side for outputting the rectified DC voltage $U_{DC}$. Notably, realizing the concept according to Fig.3b, the DC-bus capacitors $C_{DC1}$, $C_{DC2}$ are utilized as absorption elements within respective absorption units 4A, 4B to arrest electrical surges. It is to be mentioned that it is also conceivable that said DC-bus capacitors $C_{DC1}$, $C_{DC2}$ are used as absorption elements in case the detection units 2A, 2B, ... are arranged between the mains filter 15 and the power system 10. It is even conceivable to completely dispense with mains filters, in case the induced PWM interferences are small enough, because the SPDs according to the invention allow for sufficient protection. For the sake of clarity, only two SPs are shown in Fig.5, while again, in a preferred fashion, for all pairs of transmission lines respective SPDs can be provided.

In case the implementation of the SPD according to Fig.2 is used, but the varistor R1 of Fig.2 is replaced with the DC-bus capacitors $C_{DC1}$, $C_{DC2}$, the implementation and component effort can be significantly reduced. Only two thyristors as well as an ignition transformer are then required. Each rectifier multilevel phase is therefore protected by two thyristors from p. The energy of the surge pulse is compensated directly into the DC link.

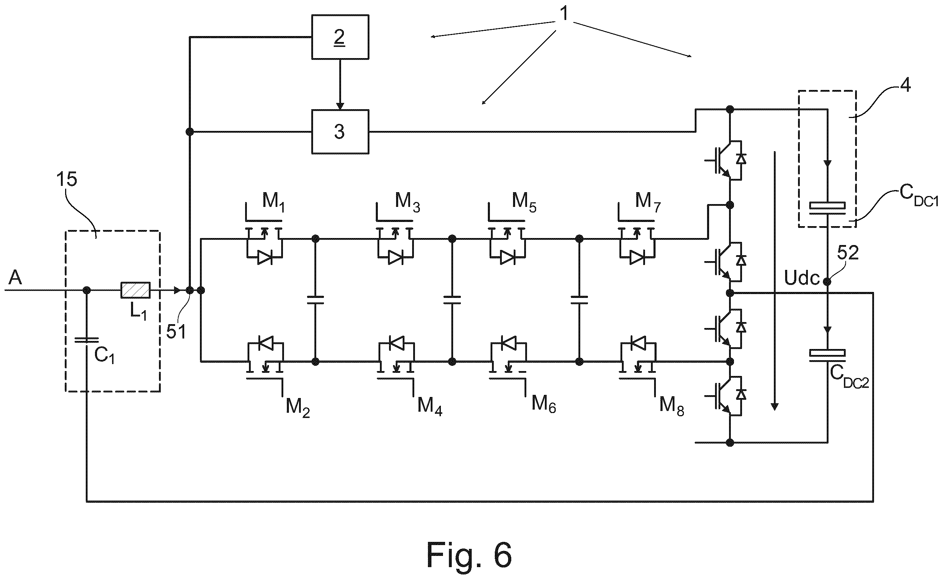

Fig.6 shows a further arrangement of a surge protection device (SPD) according to the invention and a multilevel inverter as a load 5. For the sake of simplicity, only one branch of the inverter is shown for only one phase A of a power system 10 supplying the inverter. Simultaneously to detecting and reacting to a surge, the MOSFETs M1... M6 of the multilevel structure are opened, to avoid any current paths through the load 5 itself, leading to the behavior that the whole surge current flows across the bypass unit 3 into the DC link capacitors, thus protecting the parasitic diodes of the power MOSFETs M1... M6 and of course the MOSFETS themselves, due to the fact that the on-state voltage across the bypass unit 3 is by far lower than the voltage across the series connection of the MOSFET diodes. In case the DC link capacitance is large enough, the resulting disturbance of the DC link is uncritical.

In Fig.6, the entry point into the rectifier 5 is designated as 51, and the connecting point between the two output capacitors $C_{DC,1}$ and $C_{DC,2}$ is designated as 52. Hence, the SPD 1 shown is arranged between said points 51 and 52 above the MOSFETS and comprises the first output capacitor $C_{DC,1}$ as an absorption element 4. In a preferred fashion, a second SPD 1 may in addition be arranged below the MOSFETs, hence encompassing the second output capacitor $C_{DC,2}$ as an absorption element 4. In this fashion, the safety of the rectifier acting as a load 5 can be improved further by a great deal.

After the surge pulse subsides, the voltage at the conducting bypass unit becomes negative. As soon as the current through the bypass unit 3 becomes negative too, the bypass unit 3 will switch off, which can be implemented in a particularly efficient manner in case a thyristor that will switch off automatically is used in the bypass unit 3. Then, the diodes of the MOSFETs will conduct again. Furthermore, the DC-link capacitances may be selected such that undervoltages and/or overvoltages on the DC link are avoided, and that electrical devices supplied by the DC link can operate at nominal conditions, e.g. for more than $100\mu s$ or more than $400\mu s$ or more than $1000\mu s$ etc., without detecting any disturbances. An expected voltage deviation at the DC link according to the surge event can be approximated for the worst case by

$$\Delta U_{DC} = \frac{U_{surge}}{2\,\Omega} \cdot \frac{t_{surge}}{C_{DC}} \cdot \frac{1}{2}$$

A further possibility of hardware implementation of the bypass unit 3 would be the use of an IGBT switch parallel to a diode to realize the bypass path 34 and to connect the first and the second terminal of the bypass unit 3. In this case, the concept works strictly the same, however less gate drivers are typically required.

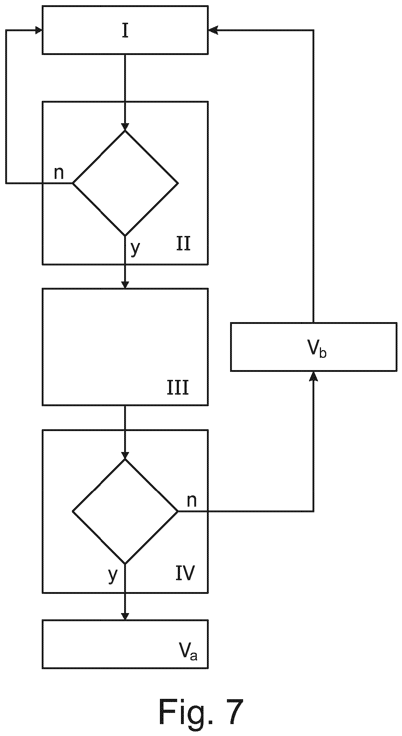

Eventually, Fig.7 presents a flow chart depicting operating steps that can be used to apply the invention to the multilevel converter of Fig.6. In the flow chart, state I represents normal operation. State II stands for the question whether a surge event has been detected ("y"...yes) or not ("n"... no). In case no surge event has been detected, because there might be a pulse but not sufficient energy, normal operation continues. However, in case a surge event has been detected, in state III, the bypass unit is switched to conduction mode and the MOSFETS in the multilevel inverter are opened. In state IV, it is monitored whether the surge and thus overload condition continues, e.g. for 200us. If it is found that no overload condition is present any longer ("n"), in state Va, the MOSFETs are operated again and normal operation is resumed. If an overload is still present after 200us, in state Vb, an error state may be activated, terminating operation to avoid damages.

**Claims**

1. A surge protection device (1) for arresting an electrical surge occurring in an electrical power system (10) with at least a first and a second power line (A, B) to supply electric power, the surge protection device (1) comprising:

    - a detection unit (2) connectable to the first and/or second power line (A, B) for generating a detection signal (d) indicative of an occurrence of an energy rich pulse in the power system (10) caused by the electrical surge;
    - a bypass unit (3) having a first bypass terminal (31) connectable to the first or the second power line (A, B), a second bypass terminal (32) connected to the first bypass terminal (31) via an electrical bypass path (34), and a trigger terminal (33) designed to receive the detection signal (d) generated by the surge detection unit (2), the electrical bypass path (34) switchable from an electrically blocking state to an electrically conducting state in response to the detection signal (d);
    - an absorption unit (4) having a first absorption terminal (41) connectable to the second bypass terminal (32) of the bypass unit (3), the absorption unit (4) being designed to arrest the electrical surge in case the bypass path (34) is in conducting state.

2. The surge protection device (1) according to claim 1, **characterized in that,** for generating the detection signal (d), the detection unit (2) is configured to integrate a rate of change of an electrical voltage between the first and the second power line (A, B) and/or of an electric current in the first and/or the second power line (A, B), and preferably scale the integral of the rate of change to arrive at the detection signal (d) indicative of the presence of a pulse and/or of the energy transported by the pulse, **and/or in that** the detection signal (d) assumes a first state designed to switch the electrical bypass path (34) into a conducting state when the detection signal (d) exceeds a predefined threshold value.

3. The surge protection device (1) according to claim 2, **characterized in that** the detection unit (2) comprises a capacitive element or an inductive element to integrate said rate of change and to transform it into the detection signal (d).

4. The surge protection device (1) according to any one of the previous claims, **characterized in that** the detection unit (2) comprises or is a digital measuring device, the digital measuring device preferably being designed to monitor whether an energy rich pulse is present and to generate the detection signal (d) based thereon.

5. The surge protection device (1) according to any one of the previous claims, **characterized in that** said electrical bypass path (34) of the bypass unit (3) comprises switching means to electrically connect the first and second bypass terminal (31, 32), said switching means selected from a group comprising a TRIAC, an SCR, and a thyristor, each element of the group having a gate electrode connected to said trigger terminal (33) of the bypass unit (3) to accept the detection signal (d).

6. The surge protection device (1) according to claim 5, **characterized in that,** in the bypass unit (3), between the first and the second bypass terminal (31, 32) and in series to said switching means, an inductor (L1) is arranged to protect said switching means from electrical overcurrent.

7. The surge protection device (1) according to any one of the previous claims, **characterized in that** said absorption unit (4) comprises an absorption element in the form of an electrical impedance and/or a varistor and/or a capacitor and/or a resistor.

8. An arrangement (100) comprising the surge protection device (1) according to any one of claims 1 to 7 to arrest electrical surges in an electrical power system (10) with at least a first and a second power line (A, B) to supply electric power, and an electrical load (5), the electrical load (5) designed to be electrically supplied via said first and second power line (A, B) of the electrical power system (10).

9. The arrangement (100) according to claim 8, **characterized in that** the electrical load (5) is an AC-DC converter, preferably a multi-level active bidirectional AC-DC converter, designed to convert an AC mains voltage provided by said first and second power line (A, B) into a rectified DC voltage.

10. The arrangement (100) according to any one of claims 8 or 9, **characterized in that** the surge protection device (1) is an integral component of the electrical load (5).

11. The arrangement (100) according to any one of claims 8 to 10, **characterized in that** the load (5) comprises an internal element capable of acting as an absorption element, preferably a DC-bus capacitor on an output side of a multi-level bidirectional AC-DC converter for outputting the rectified DC voltage or a resistor in the load (5) or a capacitor in the load (5), **and in that** said internal element is used as an absorption element in the absorption unit (4) to arrest the electrical surge.

12. The arrangement (100) according to claim 11, **characterized in that** the bypass path (34) of the bypass unit (3) runs parallel to at least a part of the electrical load (5) that requires surge protection, preferably parallel to semiconductor switches of a multi-level bidirectional AC-DC converter as load (5) from the first bypass terminal (31) to the DC-bus capacitor.

13. A surge protection method for arresting an electrical surge occurring in an electrical power system (10) with at least a first and a second power line (A, B) to supply electric power, the method comprising the steps of:

- by means of a detection unit (2) generating a detection signal (d) indicative of an occurrence of an energy rich pulse in the power system caused by the electrical surge;
- providing a bypass unit (3) with a first bypass terminal (31) connected to the first or the second power line (A, B), a second bypass terminal (32) connected to the first bypass terminal (31) via an electrical bypass path (34), and a trigger terminal (33) designed to receive the detection signal (d) generated by the surge detection unit (2);
- in response to the detection signal (d), switching the electrical bypass path (34) from an electrically blocking state to an electrically conducting state;
- by means of an absorption unit (4) connected to the second bypass terminal (32) of the bypass unit (3), arresting the electrical surge in case the bypass unit (3) is in conducting state.

14. The method according to claim 13, **characterized in that** an active multi-level bidirectional AC-DC converter is provided as an electrical load (5) being electrically supplied by the electrical power system (10).

15. The method according to claim 14, **characterized in that** the multi-level bidirectional AC-DC converter is deactivated in case a surge event is detected and reactivated after the surge event.

Fig. 1

Fig. 2

Fig. 3a

Fig. 3b

Fig. 4

EP 4 787 647 A1

Fig. 5

Fig. 6

Fig. 7

Europäisches
Patentamt

European
Patent Office

Office européen
des brevets

## EUROPEAN SEARCH REPORT

Application Number

EP 25 15 5310

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 226 162 B1 (KLADAR DALIBOR [CA] ET AL) 1 May 2001 (2001-05-01) * columns 1-4; figures 1-3 * ----- | 1-3,5-8, 13 | INV. H02H9/04 |
| X | US 10 700 515 B2 (DET INT HOLDING LTD [KY] ET AL.) 30 June 2020 (2020-06-30) | 1,4,7-14 | |
| Y | * columns 2-10; figures 1-9 * ----- | 15 | |
| A | CN 103 066 582 A (STATE GRID SMART GRID RES INST; CHINA EPRI ELECTRIC POWER ENG ET AL.) 24 April 2013 (2013-04-24) * figures 1-7 * ----- | 1,13-15 | |
| Y | US 11 509 233 B1 (KEISTER JOSH [US] ET AL) 22 November 2022 (2022-11-22) | 15 | |
| A | * columns 7,8; figures 1, 4A, 4B, 9, 10 * ----- | 1,13,14 | |

TECHNICAL FIELDS
SEARCHED (IPC)

H02H

The present search report has been drawn up for all claims

| Place of search | Date of completion of the search | Examiner |
|---|---|---|
| Munich | 8 August 2025 | Gomes Guerreiro, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5310

08-08-2025

| Patent document cited in search report | | Publication date | Patent family member(s) | | Publication date |
|---|---|---|---|---|---|
| US 6226162 | B1 | 01-05-2001 | CA | 2311137 A1 | 02-12-2000 |
| | | | CN | 1276641 A | 13-12-2000 |
| | | | EP | 1058366 A2 | 06-12-2000 |
| | | | MX | PA00005397 A | 25-04-2003 |
| | | | US | 6226162 B1 | 01-05-2001 |
| US 10700515 | B2 | 30-06-2020 | CN | 105450004 A | 30-03-2016 |
| | | | EP | 2999075 A1 | 23-03-2016 |
| | | | HK | 1218995 A1 | 17-03-2017 |
| | | | US | 2016087431 A1 | 24-03-2016 |
| CN 103066582 | A | 24-04-2013 | NONE | | |
| US 11509233 | B1 | 22-11-2022 | US | 11509233 B1 | 22-11-2022 |
| | | | WO | 2023212452 A1 | 02-11-2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230108660 A1